# EUROPEAN PATENT SPECIFICATION

(11) **EP 2 048 479 B1**
(45) Date of publication and mention of the grant of the patent: **14.10.2015**
(21) Application number: 07745051.8
(22) Date of filing: 12.06.2007
(51) Int. Cl.: G01D 13/22, B60K 35/00, B60K 37/02, G01D 7/00

(54) **INDICATING INSTRUMENT**
ANZEIGEINSTRUMENT
INSTRUMENT INDICATEUR

(30) Priority: 30.06.2006 JP 2006180719
(43) Date of publication of application: 15.04.2009
(73) Proprietor: NIPPON SEIKI CO., LTD., Nagaoka-shi, Niigata 940-8580 (JP)
(72) Inventor: YOSHIDA, Takaki, Niigata (JP)
(74) Representative: Jackson, Richard Eric
(86) International application number: PCT/JP2007/061764
(87) International publication number: WO 2008/001605

(56) References cited:
- DE-A1- 4 321 146
- JP-A- 2002 254 737
- JP-A- 2004 146 785
- JP-A- 2005 156 391
- JP-A- 2006 098 160
- JP-A- 2006 098 160
- US-A- 2 991 418

## Description

### TECHNICAL FIELD

The present invention refers to an indicating instrument that is installed in a vehicle or the like and to an indicating instrument of a type that performs information display by an electronic indicator in the center of a pointer indication part comprising a pointer and an indication panel and where the pointer is routed around the rear of the indicator to the front of the indication panel.

### BACKGROUND ART

For this type of indicating instrument, the indicating instruments described in Patent Document 1 and Patent Document 2 listed below, for example, are well-known. The indicating instrument is provided with an indicator comprising a liquid crystal panel or the like, an indication panel where index parts are arranged along the outer periphery of this indicator, a pointer that points to the index parts, a drive member (internal rotary device) that is disposed on the back of the indicator in order to operate this pointer, a circuit board that is electrically coupled to, and is mechanically fixed and held on this drive member, and an instrument case that fixes and holds this circuit board. A revolving base part of the pointer is coupled (press-inserted and fixed) to a drive shaft (pointer shaft) of the drive member, and a free-end side of the pointer is bent so as to route around the rear of the indicator to the front of the indication panel. In order to enable the movement of the pointer which is bent in this manner, there is an allowable space between the indicator and circuit board for the pointer to move. The distance between the indicator and the circuit board is set by an allowable distance where there is no affect on the actuation of the pointer.

### Patent Document 1: JP-A-2003-14508

### Patent Document 2: DE 4321146 A1

Other prior art indicating instruments are known from JP 2006 098160 and US-2991418.

### DISCLOSURE OF THE INVENTION

### PROBLEM THAT THE INVENTION IS TO SOLVE

Incidentally, in Patent Document 1 and Patent Document 2 listed above, when the indicating instrument is assembled, the drive member that has been electrically and mechanically assembled to the circuit board is attached and fixed using the instrument case as a reference, the pointer is press-inserted and fixed to the drive shaft (pointer shaft) that is disposed on the drive member, and the indicator comprising a liquid crystal panel or the like that is disposed on a front surface side of the drive member is assembled and fixed. At this time, due to the limitation of the space or assembly order, it is necessary to place the pointer in a temporarily fixed state first before the indicator is assembled and fixed, and to assemble the pointer with respect to the drive shaft that is provided on the drive member. Thereafter, the indicator and indicator panel are set and the pointer needs to be press-inserted and fixed aligning the pointing position (direction of the pointer) with a predetermined position of the index parts disposed on the indication panel. Therefore, so in addition to the step of driving in and press-inserting while aligning the pointer, it decreases and affects the work efficiently and the work efficiency decreases and affects the assembly.

For this reason, although it is conceivable to ensure space and make it easier to perform assembly work in a state where leeway has been given to clearances between each of the configural parts such that assembly and adjustment work can be performed simply and conveniently, the more that space is ensured, the more that the thickness of the indicating instrument itself widens, which has been a factor that prohibiting the indicating instrument from becoming thinner. For this reason, it is possible to ensure enough space between each part for easy assembly and adjustment. However, more space allows the indicating instrument to widen the width and prevents development of the thinness of the instruments.

In addition, when the pointer itself is bent and guided so that the pointer is routed around from the rear of the indicator to the front of the indicator and the indication panel, the indicator and the like may need to be divided into some parts otherwise the pointer can be successfully assembled. For this reason, it is necessary to couple and fix together the divided pointer. However, assembling the divided parts causes bending of the pointer itself, and this makes the assembly work complicated.

The present invention has been made focusing on this point, and it is the main object thereof to provide an indicating instrument that is capable of being assembled with enhanced workability.

### MEANS FOR SOLVING THE PROBLEM

In order to solve the aforementioned problem, the present invention of an indicating instrument comprising: an indicator; an indication panel where index parts are disposed along an outer periphery of a front surface side of this indicator; a drive member that is disposed in the back of the indication panel and indicator, and includes a rotatable pointer shaft; a pointer which is fixed to the pointer shaft disposed on this drive member rotatably points along the index parts disposed on the indication panel; a circuit board that is electrically coupled to, and is mechanically fixed to and held on the drive member; and an instrument case that fixes and holds this circuit board with the pointer being routed around the rear of the indicator to the front of the indication panel, wherein a marker part comprising a triangular projecting part that is capable of aligning the pointer is provided on the instrument case.

By configuring the indicating instrument in this manner, when the indicating instrument is to be assembled, the drive member that includes the pointer shaft that has been fixed to and held on the circuit board using the instrument case as a reference can be fixed and held, and next the pointer can be press-inserted and fixed, while the assembling direction of the pointer is simply aligned along the marker part (sign part) disposed on the instrument case, with respect to the pointer shaft disposed on the drive member. Therefore, the assembly work can be efficiently improved compared to the prior art.

Further, the indicating instrument is **characterized in that** the marker part is formed by a recessed part and a projecting part.

By configuring the indicating instrument in this manner, the marker part (sign part) which is a reference of the driving-in position of the pointer during molding of the instrument case is provided. The sign part can be formed without the cost for extra part for the maker.

Further, the indicating instrument is **characterized in that** the marker part is formed by a surface-treated layer.

By configuring the indicating instrument in this manner, forming the marker part (sign part) in a different color of the instrument case makes it easy to discriminate the driving-in position. Thus, there is the advantage that it becomes easier to discriminate the direction of the pointer and the marker part (sign part) during assembly of the pointer. Further, conversely, when the marker part (sign part) is to be formed so as to not be conspicuous, it is also possible to form the marker part in a similar color as the instrument case.

### EFFECTS OF THE INVENTION

The indicating instrument according to the present invention is an indicating instrument comprising: an indicator; an indication panel where index parts are disposed along an outer periphery of a front surface side of this indicator; a drive member that is provided in back of this indication panel and the indicator and includes a rotatable pointer shaft; a pointer that is fixed to the pointer shaft disposed on this drive member and rotatably points along the index parts provided on the indication panel; a circuit board that is electrically coupled to and is mechanically fixed to and held on the drive member; and an instrument case that fixes and holds this circuit board, with the pointer being routed around the rear of the indicator to the front of the indication panel, wherein a marker part (sign part) that is capable of aligning the pointer is provided on the instrument case, whereby when the indicating instrument is to be assembled, the drive member that includes the pointer shaft that has been fixed to and held on the circuit board using the instrument case as a reference can be fixed and held, and next the pointer can be press-inserted and fixed, while the assembling direction of the pointer is simply aligned along the marker part (sign part) disposed on the instrument case, with respect to the pointer shaft provided on the drive member. Therefore, the indicating instrument is capable of being assembled with enhanced workability, and the initial object can be achieved.

Further, in the indicating instrument where the pointer is routed around the rear of the indicator to the front of the indication panel, the pointer is divided into and formed by a first pointer part that exists in a first area that is positioned behind the indicator and is substantially not seen from the viewer side and a second pointer part that exists in a second area that is positioned in front of the indicator and is substantially seen from the viewer side, and a communicating part that communicates with the first area from a rear outer part of the indicating instrument is disposed. When the indicating instrument is to be assembled, the drive member that includes the pointer shaft that has been fixed to and held on the circuit board using the instrument case as a reference is fixed and held, and next the first pointer part is assembled and fixed with respect to the pointer shaft disposed on the drive member, and thereafter the indicator and the indication panel are set and assembled, and when the second pointer part is to be coupled and fixed with respect to the first pointer part, the first pointer part is supported by a jig that is disposed exposed from the communicating part (pointer receiving jig insertion-use hole part), whereby the problem that a load ends up being applied to the first pointer part, the first pointer part ends up bending and excess weight is applied to the drive member can also be prevented beforehand. Therefore, the indicating instrument is capable of being assembled with enhanced workability, and the initial object can be achieved.

### BRIEF DESCRIPTION OF THE DRAWINGS

[FIG. 1] FIG. 1 is a front diagram of an indicating instrument showing a first embodiment of the present invention.
[FIG. 2] A cross-sectional diagram along line A-A of FIG. 1.
[FIG. 3] An exploded perspective diagram of relevant parts showing the schema of an indicator and a pointer instrument.
[FIG. 4] FIG. 4 is a front diagram of relevant parts showing a sign part disposed on an instrument case.
[FIG. 5] FIG. 5 is a structural front diagram of relevant parts showing an assembled state of the pointer (first pointer part) with respect to the instrument case.
[FIG. 6] FIG. 6 is a cross-sectional diagram of relevant parts showing an assembled state of the pointer (first pointer part), the indicator and the pointer (second pointer part) using the instrument case as a reference.
[FIG. 7] FIG. 7 is a cross-sectional diagram of relevant parts showing a state where a face plate (shielding member) and a front cover have been assembled after assembly of the pointer instrument and the indicator shown in FIG. 6.

### DESCRIPTION OF THE REFERENCE SIGNS

- 1: Shielding Member
- 2: Front Cover
- 3: Instrument Case
- 3A: Attachment Receiving Part
- 3B: Recessed Part
- 3C: Hole Part
- 3D: Communicating Part (Pointer Receiving Jig Insertion-Use Hole Part)
- 4: Circuit Board
- 4A: Jig Insertion-Use Hole Part
- 5: Rear Cover
- 5A: Through Hole
- 5B: Jig Insertion-Use Hole Part
- 6: Drive Member
- 7: Drive Shaft (Pointer Shaft)
- 8: Pointer
- 8A: First Pointer Part
- 8a: Boss Part
- 8B: Second Pointer Part
- 8C: Coupling Member
- 9: Pointer-Use Light Source
- 10: Liquid Crystal Display Panel
- 11: Frame-Shaped Holder
- 11A: Partition Wall
- 11B: Attachment Leg Part
- 11C: Hole Part
- 12: Indication Panel
- 12A: Index Part
- 12B: Window Part
- 13: Printed Board
- 14: Liquid Crystal Display Panel-Use Light Source (Light Source)
- 15: Indication Panel-Use Light Source (Light Source)
- 16: Light Guide Body
- 16A: Light Introduction Part
- 16B: Reflection Part
- 17: Screw
- 18: Fixing Member
- D1, D2, D3: Indicators
- G1, G2, G3: Pointer Instruments
- M: Marker Part (Sign Part)
- M1: First Marker Part (First Sign Part)
- M2: Second Marker Part (Second Sign Part)
- R1: First Illumination Room
- R2: Second Illumination Room

### BEST MODE FOR IMPLEMENTING THE INVENTION

Below, an embodiment of an indicating instrument to which the present invention is applied will be described on the basis of the attached drawings.

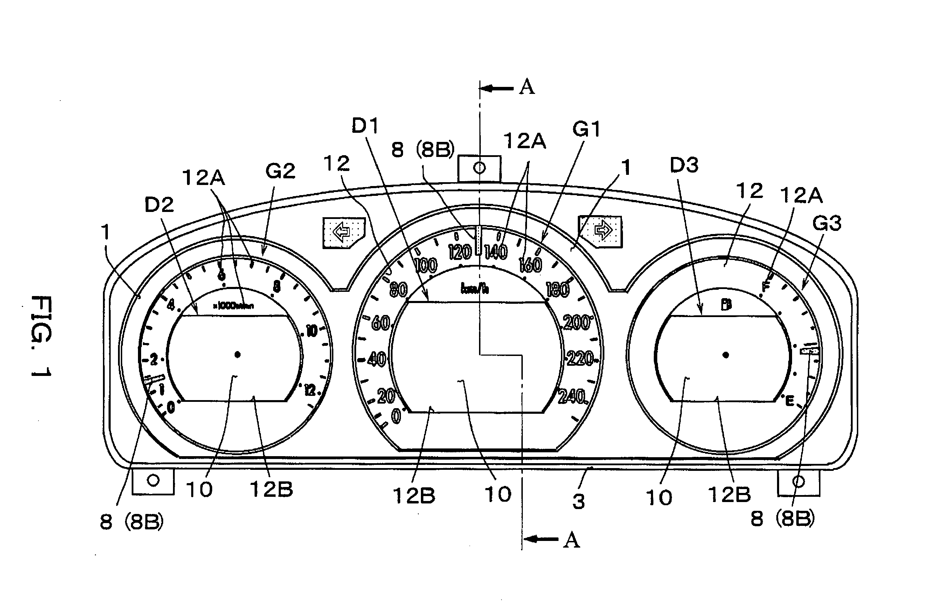

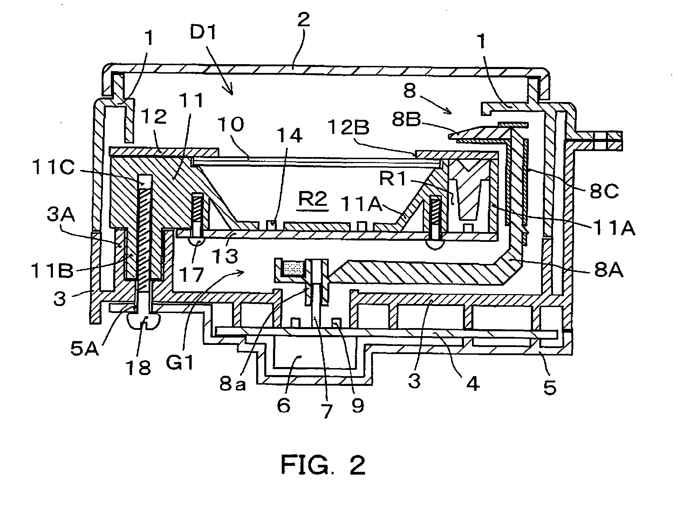

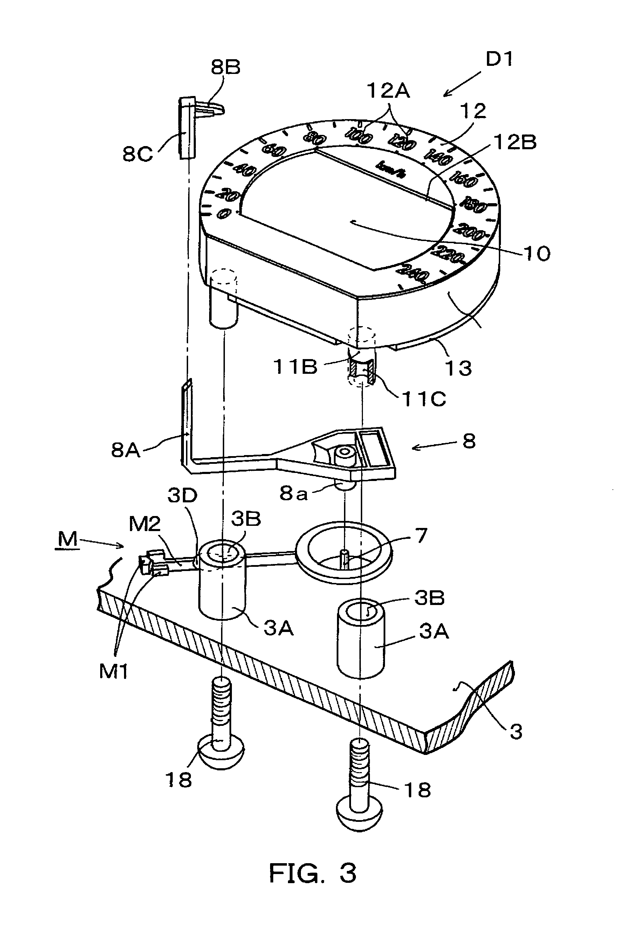

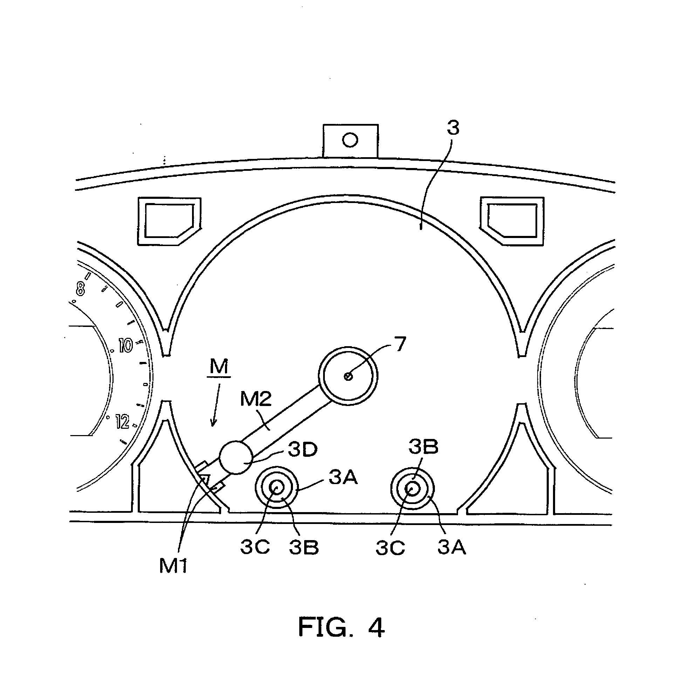

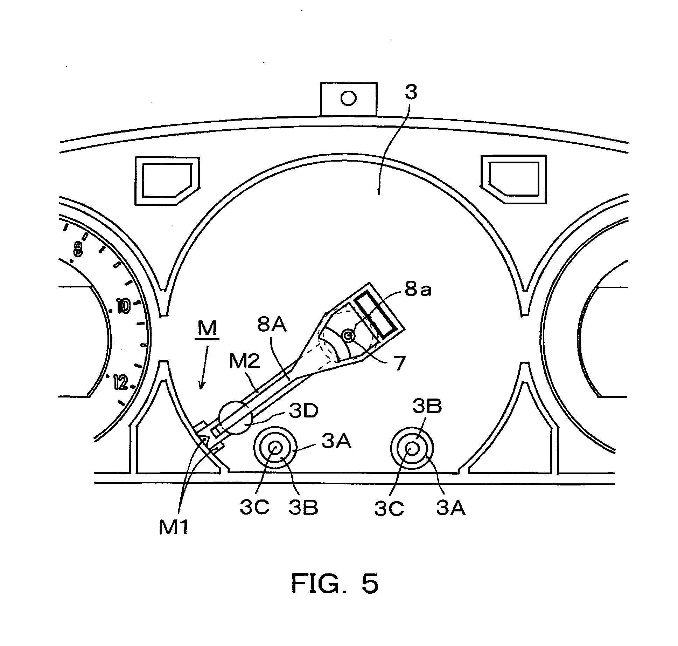

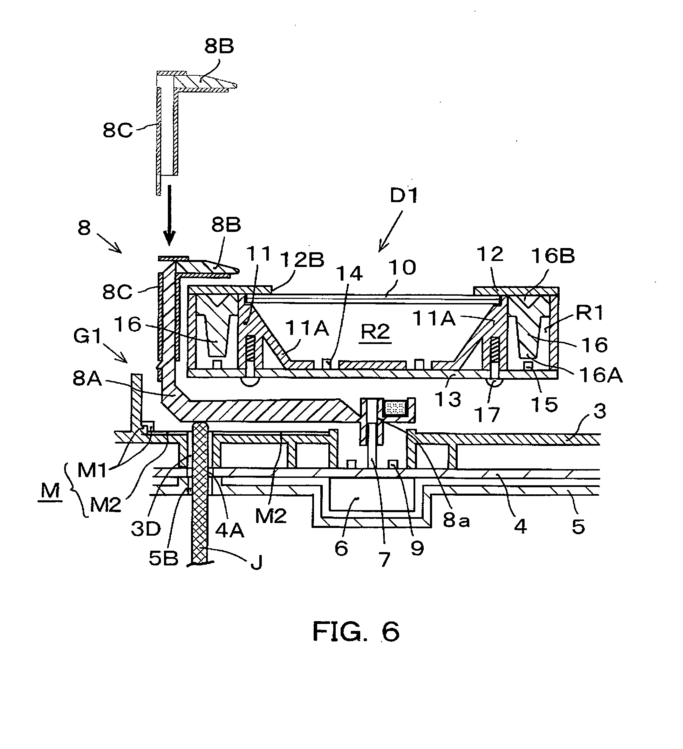

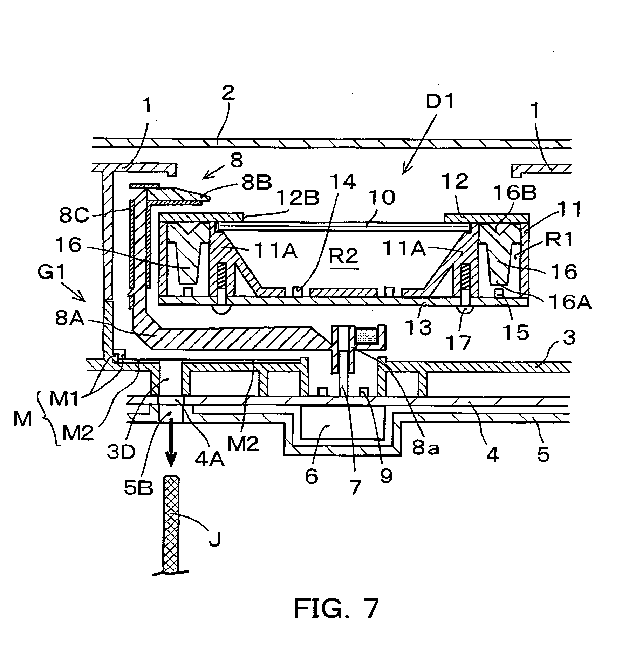

FIG. 1 to FIG. 7 show a first embodiment of the present invention. FIG. 1 is a front diagram of an indicating instrument. FIG. 2 is a cross-sectional diagram along line A-A of FIG. 1 . FIG. 3 is an exploded perspective diagram of relevant parts showing the schema of an indicator and a pointer instrument. FIG. 4 is a front diagram of relevant parts showing a sign part disposed on an instrument case. FIG. 5 is a structural front diagram of relevant parts showing an assembled state of the pointer (first pointer part) with respect to the instrument case. FIG. 6 is a cross-sectional diagram of relevant parts showing an assembled state of the pointer (first pointer part), the indicator and the pointer (second pointer part) using the instrument case as a reference. FIG. 7 is a cross-sectional diagram of relevant parts showing a state where a face member (shielding member) and a front cover have been assembled after assembly of the pointer instrument and the indicator shown in FIG. 6.

The indicating instrument according to the present embodiment comprises a combination meter that is installed in a dashboard of an automobile. For example, as shown in FIG. 1, an indicating instrument where indicators that are positioned in the center and pointer instruments that are disposed so as to surround the indicators are set, and the indicating instrument is arranged in a horizontal row and configured. Besides, in FIG. 1, only a pointer instrument G1 and an indicator D1 that are positioned in the center are shown in detail, and pointer instruments G2 and G3 and indicators D2 and D3 that are positioned on both sides respectively paired and are set on the both ends of the instrument.

The mechanical configurations of the pointer instruments G1 to G3 and the indicators D1 to D3 are the same in their basic parts, and only the contents that they measure and display (types of measured values, etc.) are different. As shown in Fig.1, the indicating instrument consist of the indicator D1 that is disposed in the center and the pointer instrument G1 (both of which will be described in detail later) that is disposed so as to surround the indicator D1.

A shielding member (face-member or mask-member) 1 is provided in front of the pointer instruments G1 to G3 and the indicators D1 to D3. This shielding member 1 comprises a light-blocking synthetic resin material (for example, black color), for example, and an opening that exposes the necessary parts of the pointer instruments D1 to D3 and hides the unnecessary parts (window frame parts).

A front cover 2 comprising a translucent synthetic resin material (for example, colorless and transparent), for example, is provided in front of the shielding member 1 and prevents the ingress of dust and the like.

An instrument case (rigid body) 3, a circuit board 4 and a rear cover 5 are respectively positioned behind (in back of) the indicators D1 to D3.

The instrument case 3 is a rigid body comprising a bottomed frame body that assembles and fixes the pointer instruments G1 to G3 and the indicators D1 to D3. The instrument case 3 works as a core part to which the shielding member 1, the front cover 2, the circuit board 4 and the rear cover 5 are directly or indirectly attached.

The circuit board 4 is a hard circuit board that is provided on the back of (the bottom part of) the instrument case 3. A drive member 6 comprising a stepping motor that configures part of the pointer instrument G1, for example, is attached to the back surface of the circuit board 4. A rotatable drive shaft 7 (pointer shaft) that is provided on this drive member 6 goes though the circuit board 4 and extends frontward and a pointer 8 is press-inserted and fixed to the distal end part of the drive shaft 7. Further, a pointer-use light source 9 comprising a light emitting diode, for example, for illuminating the pointer 8 is provided on the front surface side of the circuit board 4 around the drive shaft 7 (pointer shaft) .

The rear cover 5 covers and protects the back surface of the circuit board 4.

Consequently, a combination meter consists of the rear cover 5, the circuit board 4, the instrument case 3, the pointer instruments G1 to G3, the indicators D1 to D3, the shielding member 1 and the front cover 2.

Next, the detailed descriptions of the pointer instrument G1 and the indicator D1 that are positioned in the center will be described.

The drive member 6 that is electrically coupled to and mechanically assembled and fixed to the back side of the circuit board 4 is disposed in the pointer instrument G1. The pointer 8 is press-inserted and fixed to the distal end part on the drive shaft 7 (pointer shaft) that is disposed on this drive member 6.

The pointer 8 is divided into and formed by a first pointer part 8A that exists in a first moving area that is positioned behind the indicator D1 and is substantially not seen from the viewer side and a second pointer part 8B that exists in a second moving area that is positioned in front of the indicator D1 and is substantially seen from the viewer side. The pointer 8 consist of the first pointer part 8A, the second pointer part 8B and a coupling member 8C for coupling together the first pointer part 8A and the second pointer part 8B. The first pointer part 8A and the second pointer part 8B both comprise a transparent synthetic resin material, and the coupling member 8C is formed by a light-blocking synthetic resin material (for example, a black color synthetic resin material).

The first pointer part 8A portion comprises a stick-like body that is routed and extends in a crank shape from the side surface of the indicator D1 to the back side. The first pointer part 8A is provided with a reflection part (not shown) that reflects in a longitudinal direction thereof light that has entered from the pointer-use light source 9 and a boss part 8a of the first pointer part 8A that extends along the drive shaft 7 and is press-inserted and fixed to the drive shaft 7. The free end part of the first pointer part 8A portion on the opposite side of the boss part 8a faces the second pointer part 8B portion.

The second pointer part 8B portion is a stick-like indication part that extends along the front surface (a later-described indication panel) of the indicator D1, and a colored layer comprising a hot stamp layer(not shown) for determining the viewing color is disposed on the back surface or the front surface of the second pointer part 8B portion.

The coupling member 8C has a box-like shape that partially houses the first pointer part 8A and the second pointer part 8B.

The pointer instrument G1 that is consisting in this manner is routed around the rear of the indicator D1 (the later-described indication panel) to the front of the indicator D1 (the later-described indication panel) and, in accompaniment with the rotation of the drive shaft 7 that is disposed on the drive member 6, revolves (rotates) around the outer periphery of the indicator D1 using the drive shaft 7 as a reference. Further, when the pointer-use light source 9 is lighted, the light is guided through the first pointer part 8A to the second pointer part 8B portion, and the second pointer part 8B becomes luminous.

The indicator D1 consist of, for example, a liquid crystal display panel 10, a frame-shaped holder 11 that holds this liquid crystal display panel 10, an indication panel 12 that is disposed on the front surface side of this frame-shaped holder 11, a printed board 13 for light source installation that is disposed on the back side of the frame-shaped holder 11, a liquid crystal display panel-use light source (light source) 14 that is disposed on this printed board 13 and illuminates the liquid crystal display panel 10, and an indication panel-use light source(light source) 15 for transmitting and illuminating the indication panel 12.

The liquid crystal display panel 10 comprises an STN (Super Twisted Nematic) or TN (Twisted Nematic) liquid crystal display panel, for example, is disposed in the center of a display unit U, and displays various information (for example, vehicle information comprising outside air temperature information, traveling distance information and fuel consumption information, and, for example, traffic information comprising navigation information). The liquid crystal display panel 10 itself is substantially rectangular when it is seen from the front cover 2 side, but a panel of an arbitrary shape such as a trapezoid or a circle can be used.

The indication panel 12 includes index parts 12A (In FIG. 1, just scales are shown and characters are omitted) that are index objects disposed along the outer periphery of the liquid crystal display panel 10 and a cutout-formed window part 12B for exposing a necessary display area of the liquid crystal display panel 10. The indication panel 12 is one where the liquid crystal display panel 10 is seen from this window part 12B, and the indication panel 12 is, as a result, positioned and disposed on the outer periphery of the upper side of the liquid crystal display panel 10. Moreover, the indication panel 12 is provided at where the display area of the liquid crystal display panel 10 is provided so that the liquid crystal display panel 10 can be seen and where the index parts 12A of the indication panel 12 are positioned on the outer periphery of the liquid crystal display panel 10, and a transparent see-through window part may also be disposed instead of the cutout-formed window part 12B. Further, for the indication panel 12 itself, an ordinary transmissive printed indication panel where the index parts 12A are formed so as to be transmissive and where the other part is formed so as to be light-blocking is employed, and the outer shape of the indication panel 12 when seen from the front cover 2 side is substantially D-shaped.

The frame-shaped holder 11 comprises a white color synthetic resin material with good light reflectance, for example, and the outer shape of the frame-shaped holder 11 when seen from the front cover 2 side is substantially D-shaped, which corresponds to the shape of the indication panel 12. This frame-shaped holder 11 is partitioned by a wall-like partition part 11A, and a first illumination room R1 that corresponds to the indication panel 12 and a second illumination room R2 that corresponds to the liquid crystal display panel 10 are formed.

The first illumination room R1 is formed in a circular arc shape along the arranged shape of the index parts 12A, the indication panel 12 is provided on the front side thereof. The indication panel-use light source 15 is provided on the back surface side, and a light guide body 16 is provided between the indication panel 12 and the indication panel-use light source 15.

The light guide body 16 is, in this embodiment, formed in a circular arc shape along the first illumination room R1, a light introduction part 16A that projects toward the indication panel-use light source 15 is formed in a position that corresponds to the indication panel-use light source 15, and a reflection part 16B comprising a conical shaped recessed part for emitting and guiding light toward the indication panel 12 is formed in a position that corresponds to the back surface side of the indication panel 12.

Additionally, when the indication panel-use light source 15 is lighted, the light is guided inside the light guide body 16 via the light introduction part 16A and is radially reflected by the reflection part 16B comprising a conical shaped recessed part, whereby the light propagates in the panel surface direction of the indication panel 12. Therefore, a relatively wide range of the index parts 12A can be illuminated using a point light source, and an illumination path leading from the indication panel-use light source 15 to the indication panel 12 is partitioned by the first illumination room R1 (partition part 11A), whereby leakage and loss of light can be controlled.

The second illumination room R2 is, in this embodiment, formed in a four-sided pyramid shape whose front side has a wide width and whose side opposite the front side has a narrow width. The liquid crystal display panel 10 is provided on the front side that has a wide width, and the liquid crystal display panel-use light source 14 is provided on the back surface side that has a narrow width.

Additionally, when the liquid crystal display panel-use light source 14 is lighted, the light is repeatedly reflected inside the second illumination room R2 such that, as a result, the entire region of the liquid crystal display panel 10 can be illuminated using a point light source, and an illumination path that leads from the liquid crystal display panel-use light source 14 to the liquid crystal display panel 10 is partitioned by the second illumination room R2 (partition part 11A), whereby leakage and loss of light can be controlled.

The liquid crystal display panel-use light source 14 and the indication panel-use light source 15 are attached to the front surface side of the printed board 13 for light source installation. The printed board 13 is assembled and fixed to the back of the frame-shaped holder 11 via screws 17, whereby the liquid crystal display panel-use light source 14 and the indication panel-use light source 15 are positioned inside the illumination rooms R1 and R2.

The frame-shaped holder 11 becomes a core part that joins together the liquid crystal display panel 10, the indication panel 12, the light guide body 16 and the printed board 13 (the liquid crystal display panel-use light source 14 and the indication panel-use light source 15) . In the present example, the liquid crystal display panel 10, the indication panel 12, the light guide body 16 and the printed board 13 are directly joined to the frame-shaped holder 11 by hooks or double-sided tape to form the indicator D1, but these may also be indirectly joined together through another member. Further, in the present embodiment, the screws 17 are used when assembling together the printed board 13 and the frame-shaped holder 11, but the fixing members or fixing means are not limited to the joining together of these parts.

The combined indicator D1 that is formed as described above is, as shown in FIG. 2 and FIG. 3, is attached and fixed in a cantilever state to the instrument case 3 through attachment leg parts 11B that are formed on the frame-shaped holder 11.

That is, the attachment leg parts 11B are formed not to prevent the movement of the pointer 8, in a region that is on the back surface side of the frame-shaped holder 11 and is positioned in a non-moving region away from a moving region (range) of the pointer 8 (see FIG. 1, FIG. 3, etc.). In this embodiment, the attachment leg parts 11B are a pair of circular cylinder-shaped projecting parts that extend toward the instrument case 3, and inside the attachment leg parts 11B hole parts 11C into which fixing members 18 comprising self-tapping screws are formed.

Attachment receiving parts 3A are formed in positions on the instrument case 3 that correspond to the attachment leg parts 11B. In this embodiment, the attachment receiving parts 3A are formed in circular cylinder shapes that open toward the attachment leg parts 11B, recessed parts 3B into which the attachment leg parts 11B are capable of being inserted and positioned are formed inside the attachment receiving parts 3A, and hole parts 3C through which the fixing members 18 are capable of being inserted are formed in the bottom parts of these recessed parts 3B. Through holes 5A through which the fixing members 18 are inserted are disposed in the rear cover 5 that is positioned on the back of the instrument case 3.

Assembly of the indicator D1 with respect to the instrument case 3 is performed by inserting and temporarily fixing the attachment leg parts 11B of the indicator D1 inside the attachment receiving parts 3A (the recessed parts 3B) of the instrument case 3, then stacking the rear case 5 on the back of the instrument case 3, and aligning the hole parts 3C and 11C that are disposed in the instrument case 3 and in the attachment leg parts 11B of the holder 11. Thereafter, inserting the fixing members 18 inside the through holes 5A and the hole parts 3C from the back (the rear cover 5 side), and then screwing the distal end sides of the fixing members 18 into the hole parts 11C of the holder 11. Therefore, the indicator D1 is disposed such that it can be stably fixed in a cantilever state to the hard instrument case 3 comprising a synthetic resin material without hindering the movement of the pointer 8.

Moreover, for the assembly of the indicator D1 with respect to the instrument case 3, as long as the indicator D1 is coupled to the instrument case 3 in the non-moving region of the pointer 8, a dedicated attachment tool may also be intervened between the indicator D1 and the instrument case 3 instead of the fitting together of recessed parts and projecting parts comprising the attachment leg parts 11B and the attachment receiving parts 3A as described above.

Further, in this first embodiment, when the indicating instrument is to be assembled, the drive member 6 that includes the drive shaft 7 (pointer shaft) that has been fixed to and held on the circuit board 4 using the instrument case 3 as a reference is fixed and held. Next, the assembling direction of the pointer 8 is aligned with a predetermined direction and the pointer 8 is inserted with respect to the drive shaft 7 that is disposed on the drive member 6. At this time, when the pointer 8 is to be fixed, on the instrument case 3 side, in order to be able to simply press-insert and fix while aligning the pointer 8, a marker part (sign part) M that becomes a guide (marker) resulting from a recessed part and projecting parts is formed on the inside surface portion of the instrument case 3. (see FIG. 3 to FIG. 7) In this first embodiment, there is a first marker part (first sign part) M1 comprising a triangular projecting part matching a longitudinal direction centerline of the pointer 8 and angular (quadrangular) projecting parts matching the width dimension of the pointer on both sides of the triangular projecting part. Further, in a position on the instrument case 3 facing the first pointer part 8A of the pointer 8 along a determined driving-in direction of the pointer 8, when seen from directly above the first pointer part 8A, a second marker part (second sign part) M2 comprising a recessed part disposed with a width that is slightly larger than the width dimension of the first pointer part 8A is formed in the inside surface portion of the instrument case 3. In this case, the second marker part M2 comprising a recessed part is formed in a groove shape along the longitudinal direction of the pointer 8. It will be noted that the driving-in position of the pointer 8 is, for example, set using as a reference a state where the pointer 8 is pointing to the 0 index where a load is not applied to the pointer 8 (a state where a mechanical load is not applied), or the marker part (sign part) M is disposed matching a condition (predetermined energized state) where the pointer 8 points to the 0 index.

Consequently, the pointer 8 (the boss part 8a disposed on the first pointer part 8A) place can be simply press-inserted and fixed while being simply aligned with respect to the drive shaft (pointer shaft) 7 along the marker part M (the first marker part M1 and the second marker part M2) that is disposed on the instrument case 3. Thus, there is the effect that assembly work efficiency can be raised in comparison to convention. (See FIG. 3, FIG. 4 and FIG. 5)

In this case, the boss part 8a place that is disposed on the first pointer part 8A may be disposed so as to be automatically press-inserted and fixed with respect to the drive shaft (pointer shaft) 7 when the pointing direction of the marker part (sign part) M (the first marker part M1 and the second marker part M2) that is disposed on the instrument case 3 and the pointer 8 (the first pointer part 8A) has been read via an imaging device and entered a predetermined allowable range, or the boss portion 8a may be press-inserted and fixed, while being simply aligned, visually along the marker part (sign part) M.

Further, as described in detail in the conventional example structure, the indicating instrument is an indicating instrument of a type where the pointer 8 is routed around the rear of the indicator D1 to the front of the indication panel 12. Because of the size and disposition of the indicator D1 or spatial problems, when the pointer 8 itself is formed so as be bent and guided so as to be routed from the rear of the indicator D1 to the front of the indicator D1 and the indication panel 12, similarly, sometimes the indicator D1 and the like can no longer be assembled unless the pointer 8 itself is divided and formed.

For this reason, as previously mentioned, the pointer 8 is divided into and formed by the first pointer part 8A that exists in the first moving area that is positioned behind the indicator D1 and is substantially not seen from the viewer side and the second pointer part 8B that exists in the second moving area that is positioned in front of the indicator D1 and is substantially seen from the viewer side. The pointer 8 consist of the first pointer part 8A, the second pointer part 8B and the coupling member 8C for coupling together the first pointer part 8A and the second pointer part 8B. When the indicating instrument is to be assembled, the drive member 6 that includes the drive shaft 7 (pointer shaft) that has been fixed to and held on the circuit board 4 using the instrument case 3 as a reference is fixed and held, and then, as mentioned previously, the first pointer part 8A that exists in the first moving area that is positioned behind the indicator D1 and is substantially not seen from the viewer side is inserted with respect to the drive shaft 7 disposed on the drive member 6 such that the assembling direction of the pointer 8 is aligned with a predetermined direction along the marker part (sign part) M (the first marker part M1 and the second marker part M2) that is disposed on the instrument case 3. (see FIG. 5)

Next, the second pointer part 8B is inserted via the coupling member 8C with respect to the distal end portion of the first pointer part 8A that is bent in an L shape and has been press-inserted and fixed to the drive shaft 7. The first pointer part 8A and the second pointer part 8B are coupled and fixed together. However, when the second pointer part 8B is inserted toward the first pointer part 8A, the excess weight is added to the first pointer part 8A as a result of inserting the second pointer part 8B to the first pointer part 8A. Due to this excess weight to the first pointer part 8A, the first pointer part 8A ends up bent and the excess weight is added to the drive member 6. A communication part (pointer receiving jig insertion-use hole part) 3D comprising a circular hole is provided to in a place in the instrument case 3 corresponding to the insertion portion. jig insertion-use hole parts 4A and 5B for inserting a jig J are disposed in the circuit board 4 and the rear cover 5 that are positioned on the back of the instrument case 3.

The first pointer part 8A is supported by the jig J that is provided so as to be exposed from the communicating part (pointer receiving jig insertion-use hole part) 3D. Therefore, the previously mentioned problems such as that the excess weight is added to the first pointer part 8A and drive member 6 will be prevented. Additionally, the communicating part (pointer receiving jig insertion-use hole part) 3D can be formed at the same time when the instrument case 3 is molded.

Further, the communicating part (pointer receiving jig insertion-use hole part) 3D can also has a function as a marker (sign part M) for setting the press-insertion direction of the first pointer part 8A during press-insertion of the pointer 8 (the first pointer part 8A) with respect to the drive shaft (pointer shaft) 7.

The present invention is not limited to the preceding embodiment and that various modified implementations are possible within the scope of the present invention. For example, in the preceding embodiment, as the marker part (sign part) M that becomes a marker resulting from a recessed part and projecting parts in the inside surface portion of the instrument case 3, the first marker part M1 comprising a triangular projecting part matching the longitudinal direction centerline of the pointer 8 and angular (quadrangular) projecting parts matching the width dimension of the pointer on both sides of the triangular projecting part. When the viewer sees from directly above the first pointer part 8A, the second marker part M2 comprising a recessed portion disposed with a width that is slightly larger than the width dimension of the first pointer part 8A is formed in the inside surface portion of the instrument case 3 along a determined driving-in direction of the pointer 8, but even when the marker part M that becomes a marker resulting from a recessed part and projecting parts is formed in the instrument case 3 in just the pointing place of the pointer 8. The pointer 8 can be press-inserted and fixed while being easily aligned along the marker part M. Furthermore, although it is not shown, even when the marker part (sign part) M that becomes a marker is formed by a surface-treated layer resulting from printing or vapor deposition on the surface portion of the instrument case 3, it has the same effect as those of the first embodiment can be expected. In this case, discrimination of the driving-in position becomes well when the marker part M is formed in a color that is different from the coloring of the instrument case 3, and there is an advantage that it becomes easier to discriminate when aligning the direction of the pointer 8 and the marker part M during assembly of the pointer 8. Further, when the marker part M is to be formed so as to not be conspicuous, it is also possible to form the marker part M in a similar color as the instrument case 3. Further, the place that becomes the marker can also be configured to be easily discriminated by forming the entire marker part (sign part) M by a combination of a marker part (sign part) M that becomes a marker resulting from a recessed part and projecting parts and a marker part (sign part) M comprising a surface treatment resulting from printing or the like.

Further, the communicating part (pointer receiving jig insertion-use hole part) 3D that communicates with the first area from the rear outer part of the indicating instrument is disposed, but in this case, depending on the use condition, the communication part 3D may also be formed so as to be covered by the rear cover 5.

Further, in the first embodiment, the indicator D1 has been described using the liquid crystal display panel 10, but an arbitrary display, such as a display resulting from LED luminescence, can be employed. For example, an indicator D1 such as an electroluminescence element or a fluorescent display tube may also be provided instead of the liquid crystal display panel 10, and other displaying/informing means may also be incorporated in addition to the indicator D1.

Further, in the first embodiment, an example has been described where the second pointer part 8B of the pointer 8 extends from the outside of the indicator 10 to the center side (where the pointer 8 is routed around in a sideways U shape with respect to the indicator D1), but the pointer 8 may also be a T-shaped pointer 8 or a crank shape pointer 8 comprising a crank shape where the distal end part of the pointer 8 is pulled around and disposed along the outside by configuring the indicating instrument such that a slit part through which the pointer 8 passes is disposed routed around the indicator D1 and such that the pointer 8 operates via this slit part.

### INDUSTRIAL APPLICABILITY

The present invention refers to an indicating instrument that is installed in a vehicle or the like and can be applied to an indicating instrument of a type that performs information display by an electronic indicator in the center of a pointer indication part comprising a pointer and an indication panel and where the pointer is routed around the rear of the indicator to the front of the indication panel.

## Claims

1. An indicating instrument comprising:
an indicator (D1);
an indication panel (12) where index parts (12A) are disposed along an outer periphery of a front surface side of this indicator;
a drive member (6) that is provided in the back of the indication panel (12) and the indicator (D1) and includes a rotatable pointer shaft (7);
a pointer (8) that is fixed to the pointer shaft (7) provided on this drive member (6) and rotatably points along the index parts (12A) disposed on the indication panel (12);
a circuit board (4) that is electrically coupled to and is mechanically fixed to and held on the drive member (6); and
an instrument case (3) that fixes and holds this circuit board (4),
with the pointer (8) being routed around the rear of the indicator (D1) to the front of the indication panel (12);
wherein a marker part (M1) comprising a triangular projecting part that is capable of aligning the pointer is provided on the instrument case.

2. The indicating instrument of claim 1, wherein the marker part (M1) is formed by a recessed part and said projecting part.

3. The indicating instrument of claim 1, wherein the marker part is formed by a pre-treated surface layer.

## Patentansprüche

1. Anzeigeinstrument, das Folgendes umfasst:
eine Anzeige (D1);
ein Anzeigefeld (12), wobei Index-Teile (12A) entlang einem Außenumfang einer Vorderseite dieser Anzeige angeordnet sind;
ein Antriebselement (6), das auf der Rückseite des Anzeigefelds (12) und der Anzeige (D1) vorgesehen ist und eine drehbare Zeigerwelle (7) umfasst;
einen Zeiger (8), der auf der auf diesem Antriebselement (6) vorgesehenen Zeigerwelle (7) fixiert ist und drehbar entlang der auf dem Anzeigefeld (12) angeordneten Index-Teile (12A) zeigt;
eine Leiterplatte (4), die mit dem Antriebselement (6) elektrisch gekoppelt ist, mechanisch daran fixiert ist und darauf gehalten wird; und
ein Instrumentengehäuse (3), das diese Leiterplatte (4) fixiert und hält,
wobei der Zeiger (8) um die Rückseite der Anzeige (D1) herum zur Vorderseite des Anzeigefelds (12) geführt ist,
wobei ein Markierungsteil (M1), der einen dreieckigen vorstehenden Teil umfasst und zum Ausrichten des Zeigers in der Lage ist, an dem Instrumentengehäuse vorgesehen ist.

2. Anzeigeinstrument nach Anspruch 1, wobei der Markierungsteil (M1) durch einen ausgesparten Teil und den vorstehenden Teil gebildet wird.

3. Anzeigeinstrument nach Anspruch 1, wobei der Markierungsteil durch eine Schicht mit vorbehandelter Oberfläche gebildet wird.

## Revendications

1. Instrument d'indication comprenant :
un indicateur (D1) ;
un panneau d'indication (12) sur lequel des éléments formant repères (12A) sont disposés le long d'une périphérie extérieure d'un côté de surface avant de cet indicateur ;
un organe d'entraînement (6) qui est placé à l'arrière du panneau d'indication (12) et de l'indicateur (D1) et comprend un axe d'aiguille rotatif (7) ;
une aiguille (8) qui est fixée à l'axe d'aiguille (7) placé sur cet organe d'entraînement (6) et pointe de façon rotative le long des éléments formant repères (12A) disposés sur le panneau d'indication (12) ;
une carte de circuit imprimé (4) qui est reliée électriquement et fixée mécaniquement à l'organe d'entraînement (6) et maintenue sur celui-ci ; et
un boîtier d'instrument (3) qui fixe et maintient cette carte de circuit imprimé (4),
l'aiguille (8) contournant l'arrière de l'indicateur (D1) jusqu'à l'avant du panneau d'indication (12),
dans lequel une partie formant marqueur (M1), comprenant une partie saillante triangulaire, qui a la capacité d'aligner l'aiguille, est prévue sur le boîtier d'instrument.

2. Instrument d'indication selon la revendication 1, dans lequel la partie formant marqueur (M1) est constituée d'une partie évidée et de ladite partie saillante.

3. Instrument d'indication selon la revendication 1, dans lequel la partie formant marqueur est constituée d'une couche de surface prétraitée.
